# EUROPÄISCHE PATENTSCHRIFT

(11) **EP 3 146 834 B1**
(45) Veröffentlichungstag und Bekanntmachung des Hinweises auf die Patenterteilung: **13.05.2020**
(21) Anmeldenummer: 15002746.4
(22) Anmeldetag: 23.09.2015
(51) Int. Cl.: A01G 7/04, A01G 7/02, A01G 20/00

(54) **EINRICHTUNG UND VERFAHREN ZUR BELEUCHTUNG VON PFLANZEN, INSBESONDERE RASENFLÄCHEN**
DEVICE AND METHOD FOR ILLUMINATING PLANTS, IN PARTICULAR LAWN AREAS
DISPOSITIF ET PROCÉDÉ D'ÉCLAIRAGE DE PLANTES, EN PARTICULIER DE GAZON

(43) Veröffentlichungstag der Anmeldung: 29.03.2017
(73) Patentinhaber: Seegrow (Developments) Limited, Stratford-upon-Avon, Warwickshire CV37 9NP (GB)
(72) Erfinder: Krabbendam, Peter, 2046 AA Haarlem (NL); Noel, Stephen, Bembridge, Isle of Wight PO355XU (GB)
(74) Vertreter: Dr. Gassner & Partner mbB

(56) Entgegenhaltungen:
- EP-A1- 1 802 379
- WO-A1-2009/124577
- DE-U1-202006 002 460
- DE-U1-202006 004 651
- US-A1- 2013 000 185

## Beschreibung

Die Erfindung betrifft eine Einrichtung und ein Verfahren zur Beleuchtung von Pflanzen, insbesondere Rasenflächen, insbesondere in Sport- und Fußballstadien.

Die EP 2 003 949 B1 beschreibt diesbezüglich ein Verfahren zur Wachstumsbeschleunigung und Regeneration von Rasenflächen, wobei die Rasenfläche zumindest teilbereichsweise oberseitig durch einen nach unten offenen allseitig umschlossenen Raum umschlossen wird und wobei in den Raum CO₂ eingeleitet wird und die vom Raum überdeckte Rasenfläche mit einer Beleuchtungseinrichtung mit Licht beaufschlagt wird, wobei das CO₂ im Raum durch Konvektion durch die Abwärme der Beleuchtungseinrichtung und/oder einer Rasenheizung verteilt wird.

Weiterhin offenbart die WO 2009/124577 A1 eine Vorrichtung zur Wachstumsbeschleunigung und Regeneration von Rasenflächen die ein nach unten offenes, auf einer Rasenfläche aufstellbares Gehäuse aufweist, das einen Raum über der Rasenfläche begrenzt, wobei das Gehäuse entweder transparent ausgebildet ist und/oder eine Beleuchtungseinrichtung zum Beleuchten der Rasenfläche aufweist. Das Gehäuse ist mit einer Verfahreinrichtung zum automatischen Bewegen des Gehäuses auf der Rasenfläche ausgebildet ist.

Die Druckschrift WO 2016/054899 A1 (EP 1 802 379 A1) offenbart eine Einrichtung zur Beleuchtung von Pflanzen mit einem Gehäuse, in dem eine Membran aufgewickelt werden kann. Die abgewickelte Membran wird durch mit Überdruck zugeführter Luft vom Untergrund beabstandet gehalten. Die Membran ist mit einer Vielzahl von Lichtquellen versehen.

Die DE 20 2006 002 460 U1 und die DE 20 2006 004 561 U1 offenbaren jeweils eine Abdeckungseinrichtung für ein Spielfeld, wobei eine Membran durch ein Luftkissen vom Untergrund beabstandet gehalten wird. Eine Membran kann Lichtquellen oder eine Beregnungsvorrichtung umfassen.

Aus der US 2013/000185 A1 ist eine Beleuchtungseinrichtung für Gewächshäuser bekannt, bei der mit Öffnungen versehene Rohrleitungen vorgesehen sind. Die Rohrleitungen sind an Ketten aufgehängt und ermöglichen punktuell die Zufuhr von CO₂, das die Rohrleitung durchströmt und durch die Auslässe abgegeben wird.

Hiervon ausgehend liegt der vorliegenden Erfindung die Aufgabe zugrunde eine Einrichtung sowie ein Verfahren zum Beleuchten von Pflanzen, insbesondere einer Rasenfläche, weiter zu verbessern.

Diese Aufgabe wird durch eine Einrichtung mit den Merkmalen des Anspruchs 1 gelöst.

Gemäß Anspruch 1 ist eine Einrichtung zur Beleuchtung von Pflanzen, insbesondere einer Rasenfläche, vorgesehen, mit:
- einer Mehrzahl an Lichtquellen, und
- einem Träger zum Tragen der Lichtquellen,
der als flexibles Flächengebilde ausgebildet ist, wobei die Lichtquellen an dem Träger festgelegt sind,
wobei der Träger ein Mittel zum Führen und Abgeben von CO₂ aufweist, vorzugsweise in Form einer flexiblen Leitung, das an dem Träger festgelegt ist und einen oder mehrere Auslässe zum Auslassen von CO₂ aufweist, wobei das Mittel weiterhin dazu ausgebildet ist, Wasser zum Bewässern der Pflanzen, insbesondere der Rasenfläche, zu führen und abzugeben, wobei insbesondere das Mittel mit einer Wasserquelle verbunden ist oder verbindbar ist.

Besonders bevorzugt ist der Träger oder eine Außenhaut der Einrichtung lichtundurchlässig für das mittels der Lichtquellen abgestrahlte (insbesondere sichtbare)

Licht oder reduziert zumindest signifikant die Intensität des Lichtes, das durch den Träger bzw. die Außenhaut nach außen dringen kann. Die erfindungsgemäße Einrichtung trägt also besonders bevorzugt wirksam zur Verringerung der sogenannten Lichtverschmutzung ("light pollution") bei, so dass die erfindungsgemäße Einrichtung insbesondere auch in Wohngebieten nachts zum Einsatz kommen kann, ohne die Anwohner erheblich zu stören. Vorzugsweise ist der Träger bzw. die Außenhaut entsprechend schwarz gefärbt bzw. ausgebildet, um insbesondere möglichst viel Licht zu absorbieren.

Die Lichtquellen (z. B. LEDs) sind vorzugsweise dazu ausgebildet, zumindest im Spektrum von 370 nm bis 730 nm Licht auszusenden. Bei dem durch die Lichtquellen ausgesendeten Licht handelt es sich bevorzugt um photosynthetisch aktive Strahlung (PAR).

Hierdurch wird ein höherer Integrationsgrad der erfindungsgemäßen Einrichtung erreicht, mit dem Vorteil, dass der Bauraum eines Gewächshauses zur Wachstumsbeschleunigung und Regeneration der Pflanzen weiter verringerbar sowie leichter aufbaubar ist. Insbesondere besteht die Möglichkeit einen Teil der Außenhaut, insbesondere einen Abschnitt des Daches des Gehäuses bzw. Gewächshauses durch den Träger selbst zu bilden.

Vorteilhafte Ausgestaltungen der erfindungsgemäßen Einrichtung sind in den entsprechenden Unteransprüchen angegeben und werden nachfolgend beschrieben.

Der Träger bzw. das Flächengebilde ist erfindungsgemäß flächig, d. h., im Wesentlichen zweidimensional ausgebildet. Das bedeutet, dass der Träger bzw. das Flächengebilde in seiner Erstreckungsebene vorzugsweise wesentlich größere Dimensionen, d. h., Länge und Breite, aufweist, als normal zur Erstreckungsebene (Dicke des Trägers).

Vorzugweise liegt die Dicke des Trägers senkrecht zu seiner flächenmäßigen Erstreckung im Bereich von 0,5 mm bis 20 mm.

Der Träger weist weiterhin vorzugsweise eine Unterseite sowie eine der Unterseite abgewandte Oberseite auf, die sich jeweils entlang der Erstreckungsebene des Trägers erstrecken, d. h. quer zur Dicke des Trägers, wobei diese beiden Seiten jeweils vorzugsweise eine Fläche im Bereich von 5 m x 6 m bis 20 m x 40 m (z. B. 5 m x 12 m) aufweisen, und/oder eine Fläche im Bereich von 30 m² bis 400 m².

An der Unterseite des Trägers, die bei einer bestimmungsgemäß angeordneten Einrichtung den Pflanzen bzw. der Rasenfläche zugewandt ist, sind vorzugsweise die Lichtquellen bzw. LEDs angeordnet.

Die Lichtquellen weisen zur Erzeugung des zur Beleuchtung der Pflanzen verwendeten Lichtes jeweils eine LED (oder einen anderen geeigneten Lichtemitter) auf. LED steht hierbei für Light Emitting Diode oder Lichtdiode, d. h., für ein lichtemittierendes Halbleiter-Bauelement, dessen elektrische Eigenschaften insbesondere einer Diode entsprechen.

Weiterhin kann jede Lichtquelle jeweils einen Kühlkörper aufweisen, der in thermischen Kontakt mit der zugeordneten LED steht und der jeweils an der Unterseite des Trägers angeordnet ist, sowie vorzugsweise jeweils einen weiteren Kühlkörper, der ebenfalls mit der zugeordneten LED in thermischen Kontakt und der jeweils an der Oberseite des Trägers angeordnet ist, so dass der Träger insbesondere zwischen den Kühlkörpern der jeweiligen Lichtquelle verläuft.

Jede Lichtquelle weist weiterhin an der Unterseite des Trägers eine lichtdurchlässige Abdeckung zum Schutz der jeweiligen Lichtquelle bzw. LED auf, die, insbesondere zusammen mit dem Träger, die jeweilige LED umgibt und gegen Feuchtigkeit abschirmt.

Gemäß einer bevorzugten Ausführungsform der Erfindung ist vorgesehen, dass das Flächengebilde eines der folgenden Flächengebilde ist:
- ein textiles Flächengebilde, vorzugsweise ein Gewebe, vorzugsweise aufweisend Polyethylen (aber auch PU, PTFE, PVC, wie unten genannt, sind möglich),
- ein Gewebe,
- ein Gewirk,
- ein Gestrick,
- ein Geflecht,
- ein Nähgewirk,
- ein Vliesstoff,
- ein Filz,
- eine Folie, vorzugsweise aus einem Kunststoff.

Eine erfindungsgemäße Kunststofffolie kann aus Polyolefinen wie z. B. Polyethylen (PE) oder Polypropylen (PP) hergestellt sein bzw. aus diesen Stoffen bestehen bzw. diese Stoffe aufweisen. Weiterhin kann eine bei der Erfindung verwendete Folie Polyvinylchlorid (PVC), Polystyrol (PS), Polyester, Polycarbonat (PC) oder Polyethylenterephthalat (PET) aufweisen bzw. aus einem dieser Stoffe bestehen.

Weiterhin kann die Folie aus einer Kombination dieser Stoffe bestehen, z. B. in Form eines Mehrschicht-Verbundes aus einer Kombination unterschiedlicher Kunststoffe. Hierdurch kann z. B. das Permeationsverhalten der Folie eingestellt werden.

Gemäß einer bevorzugten Ausführungsform der Erfindung ist der Träger bzw. das Flächengebilde vorzugsweise nicht-permeabel für Flüssigkeiten und/oder Gase (wie z. B. CO₂).

Gemäß der Erfindung ist vorgesehen, dass die Einrichtung ein Mittel zum Führen und Abgeben von CO₂ aufweist, vorzugsweise in Form einer flexiblen Leitung (z. B. vorzugsweise in Form eines flexiblen Schlauchs), das an dem Träger festgelegt ist und einen oder mehrere Auslässe zum Auslassen von CO₂ aufweist.

Gemäß einer weiteren Ausführungsform der Erfindung ist vorgesehen, dass das Mittel bzw. die flexible Leitung vom Träger zumindest abschnittsweise umgeben ist, d. h., im Querschnitt vom Träger umschlossen wird. Hierbei können die Auslässe des Mittels bzw. der Leitung in Form von Düsen aus dem Träger herausragen, und zwar bevorzugt an einer Unterseite des Trägers, an der auch die LEDs vorzugsweise festgelegt sind. Diese Unterseite ist bei einer bestimmungsgemäß angeordneten Einrichtung den zu beleuchtenden Pflanzen bzw. der Rasenfläche zugewandt.

Weiterhin ist gemäß einer Ausführungsform der Erfindung vorgesehen, dass das Mittel bzw. die Leitung mit einem CO₂-Speicher verbunden oder verbindbar ist, so dass CO₂ über das Mittel bzw. die Leitung abgebbar ist und die Pflanzen kontaktieren kann.

Dieses Mittel bzw. diese Leitung ist weiterhin dazu ausgebildet, Wasser zum Bewässern der Pflanzen zu führen und über die Auslässe abzugeben, wobei insbesondere das Mittel mit einer Wasserquelle verbunden ist oder verbindbar ist. Ggf. können Wasser und CO₂ gemischt werden und gemeinsam über das Mittel bzw. die Leitung sowie deren Auslässe abgegeben werden. Vorzugsweise werden Wasser und CO₂ getrennt zugeführt. Des Weiteren können auch andere Nährstoffe (z. B. Dünger) über das Mittel bzw. die Leitung sowie deren Auslässe abgegeben werden (z. B. durch Vermischen mit dem Wasser etc.).

Alternativ hierzu kann gemäß einer Ausführungsform vorgesehen sein, dass die Einrichtung eine separate, vorzugsweise flexible, Bewässerungsleitung zum Führen und Abgeben von Wasser aufweist (z. B. in Form eines flexiblen Schlauchs), die an dem Träger festgelegt ist und einen oder mehrere Auslässe zum Auslassen von Wasser aufweist.

Auch die Bewässerungsleitung ist bevorzugt vom Träger zumindest abschnittsweise umgeben, d. h. wird im Querschnitt vom Träger umschlossen. Mit anderen Worten sind also vorzugsweise die oben dargelegte Leitung bzw. Mittel zum Abgeben von CO₂ sowie ggf. die Bewässerungsleitung in den Träger integriert.

Ebenfalls können die Auslässe der Bewässerungsleitung in Form von Düsen aus dem Träger, und zwar insbesondere an dessen Unterseite, herausragen.

Gemäß einer bevorzugten Ausführungsform der Erfindung sind die Lichtquellen bzw. LEDs in vorzugsweise parallelen Reihen am Träger angeordnet, so dass sie bevorzugt gleichmäßig über den Träger verteilt sind.

Weiterhin ist gemäß einer bevorzugten Ausführungsform der Erfindung vorgesehen, dass sich das Mittel zum Abgeben von CO₂ zumindest abschnittsweise zwischen benachbarten Lichtquellen bzw. LEDs entlang des Trägers erstreckt.

Gleiches gilt vorzugsweise auch für die besagte Bewässerungsleitung.

Auf diese Weise können, vorzugsweise ebenfalls gleichmäßig über den Träger verteilt, CO₂ und/oder Wasser auf die Pflanzen nach unten hin abgegeben werden.

Besonders bevorzugt weist die Einrichtung gemäß einer Ausführungsform der Erfindung ein nach unten hin offenes Gehäuse auf, das eine Außenhaut aufweist, die dazu eingerichtet und vorgesehen ist, einen Raum oberhalb der Pflanzen, insbesondere der Rasenfläche, zu begrenzen, wobei der Träger in jenem Raum angeordnet ist oder zumindest einen Teil der Außenhaut, vorzugsweise einen Dachabschnitt der Außenhaut, bildet.

Ein derartiges Gehäuse bzw. Gewächshaus kann weiterhin verfahrbar ausgebildet sein, so dass es entlang der Rasenfläche bzw. entlang der Pflanzen, insbesondere in der Horizontalen, verfahren werden kann, um insbesondere großflächige Rasenflächen zu behandeln.

Weiterhin kann die Einrichtung ein separates Heiz- oder Kühlmittel aufweisen, das dazu ausgebildet ist, den Raum des Gehäuses auf eine vordefinierte Temperatur, die insbesondere dem Pflanzenwachstum förderlich ist, zu heizen oder zu kühlen.

Gemäß einem weiteren Aspekt der Erfindung ist ein Verfahren zum Beleuchten von Pflanzen, insbesondere einer Rasenfläche, gemäß Anspruch 13 vorgesehen, wobei eine erfindungsgemäße Einrichtung verwendet wird, und die Pflanzen mittels der Lichtquellen dieser Einrichtung beleuchtet werden.

Hierbei werden gemäß einem Ausführungsbeispiel des Verfahrens weiterhin die Pflanzen, insbesondere die Rasenfläche, mittels der Einrichtung mit CO₂ und/oder Wasser beaufschlagt sowie vorzugsweise auch mit einem Dünger.

Das CO₂ kann in dem Gehäuse z. B. durch Konvektion sowie durch die Abwärme der Lichtquellen/LEDs oder einer etwaigen Rasenheizung verteilt werden.

Weiterhin wird bevorzugt bei dem erfindungsgemäßen Verfahren der Gasgehalt im Gehäuse bzw. in dem Raum des Gehäuses auf 500 bis 2.500 ppm CO₂ eingestellt.

Weiterhin wird vorzugsweise bei dem erfindungsgemäßen Verfahren bzw. bei der erfindungsgemäßen Einrichtung die Größe des Raumes bzw. des Gehäuses so gewählt, dass sich bei einer vordefinierten Standzeit von vorzugsweise vier bis zwölf Stunden innerhalb des Gehäuses bzw. in dem Raum eine Temperatur von zumindest 6 °C einstellt. Die Temperatur innerhalb des Raumes kann zusätzlich bzw. alternativ mit dem separaten Heizmittel auf eine vordefinierte Temperatur eingestellt werden.

Gemäß einem Ausführungsbeispiel der erfindungsgemäßen Einrichtung bzw. des erfindungsgemäßen Verfahrens ist insbesondere vorgesehen, dass der Raum des Gehäuses eine horizontale Grundfläche im Bereich 5 m x 6 m bis 20 m x 40 m aufweist, und/oder dass der umbaute bzw. geschlossene Raum eine Grundfläche von 30 m² bis 400 m² umfasst.

Weitere Merkmale und Vorteile der Erfindung sollen bei den nachfolgenden Figurenbeschreibungen von Ausführungsbeispielen der Erfindung anhand der Figuren erläutert werden. Es zeigen:

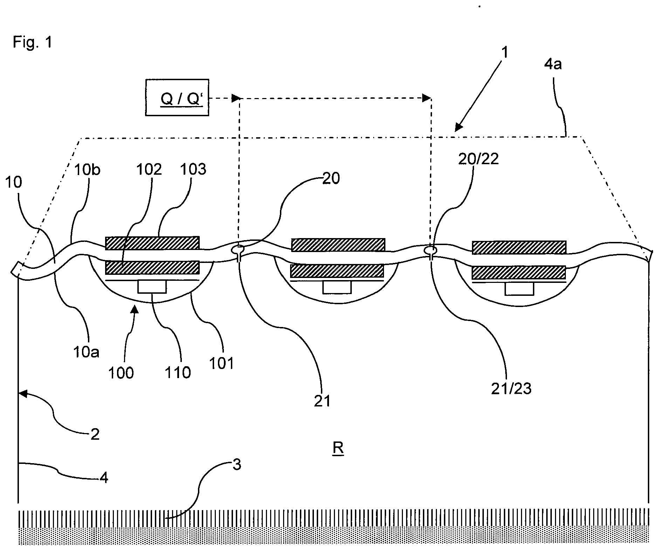

- Fig. 1: eine schematische Schnittansicht einer erfindungsgemäßen Einrichtung.
Die Figur 1 zeigt eine erfindungsgemäße Einrichtung zur Beleuchtung von Pflanzen, die hier in Form einer horizontal erstreckten Rasenfläche 3 vorliegen.

Die Einrichtung 1 weist eine Mehrzahl an Lichtquellen 100 auf, die zur Lichterzeugung jeweils über eine LED 110 verfügen, sowie einem Träger 10 in Form eines flexiblen Flächengebildes (z. B. ein Gewebe), der zum Tragen der Lichtquellen 100 ausgebildet ist. Der Träger 10 ist weiterhin vorzugsweise nicht-permeabel ausgebildet (z. B. für H₂O und/oder CO₂).

Der Träger 10 ist dazu eingerichtet, sich flächig oberhalb der Rasenfläche 3 zu erstrecken und weist dabei eine Unterseite 10a auf sowie eine der Unterseite abgewandte Oberseite 10b.

Der Träger 10 wird vorzugsweise in oder an einem oberhalb der Rasenfläche 3 aufgestellten Gehäuse 2 angeordnet, das in diesem Fall eine Außenhaut 4 mit einem Dachabschnitt 4a aufweist, wobei die Außenhaut 4 einen Raum R des Gehäuses 2 oberhalb der Rasenfläche umgibt. Alternativ kann der Träger 10 selbst einen Dachabschnitt des Gehäuses 2 bilden. In diesem Fall kann der mit der strichpunktierten Linie dargestellte Dachabschnitt 4a des Gehäuses 2 entfallen.

Die Unterseite 10a des Trägers ist der Rasenfläche 3 zugewandt, so dass die an der Unterseite festgelegten LEDs 110 der einzelnen Lichtquellen 100 die Rasenfläche 3 beleuchten können. Hierbei sind die Lichtquellen 100 /LEDs 110 vorzugsweise in äquidistanten parallelen Reihen am Träger 10 festgelegt, so dass die Rasenfläche 3 möglichst gleichmäßig beleuchtbar ist. Hierbei sind vorzugsweise in jeder Reihe eine Mehrzahl an Lichtquellen 100 vorgesehen, so dass insbesondere der Abstand zweier benachbarter LEDs 110 in einer Reihe dem Abstand zweier benachbarter Reihen entspricht.

Weiterhin weisen die Lichtquellen 100 vorzugsweise jeweils zwei Kühlkörper 102, 103 auf, die jeweils in thermischen Kontakt mit der zugeordneten LED 110 stehen, wobei einer der Kühlkörper 102 an der Unterseite 10a des Trägers 10 angeordnet ist und der andere Kühlkörper 103 an der Oberseite 10b des Trägers 10, so dass der Träger insbesondere zwischen den Kühlkörpern 102, 103 der jeweiligen Lichtquelle 100 verläuft.

Jede Lichtquelle 100 weist weiterhin an der Unterseite 10a des Trägers 10 eine lichtdurchlässige, mit dem Träger verbundene Abdeckung 101 zum Schutz der jeweiligen Lichtquelle 100 bzw. LED 101 vor Witterungseinflüssen auf, die die jeweilige LED 110 überdeckt.

Abgesehen von der Beleuchtung der Pflanzen/Rasenfläche 3 sind zur Wachstumsbeschleunigung und Regeneration der Pflanzen/Rasenfläche 3 eine oder mehrere vorzugsweise flexible Leitungen 20 in den Träger 10 integriert, über die aus einem CO₂-Speicher Q CO₂ ausgegeben werden kann. Hierzu weist die mindestens eine Leitung 20 Auslässe 21 an der Unterseite 10a des Trägers 10 auf, über die das CO₂ ausgestoßen werden kann. Die gleichen Leitungen 20 können auch zum Bewässern und/oder Düngen der Pflanzen bzw. Rasenfläche 3 verwendet werden. Hierzu stehen die Leitungen 20 dann in Verbindung mit einer entsprechenden Wasserquelle Q'. Wasser und CO₂ können auch gleichzeitig als Gemisch über die Leitungen 20 und Auslässe 21 auf die Pflanzen/Rasenfläche 3 gegeben werden. Alternativ hierzu können für die Bewässerung separate Bewässerungsleitungen 22 vorhanden sein, die über Auslässe 23 an der Unterseite 10a des Trägers 10 verfügen und dann mit einer separaten Wasserquelle Q' verbindbar bzw. verbunden sind.

**Bezugszeichen**

| | |
|---|---|
| 1 | Einrichtung |
| 2 | Gehäuse |
| 3 | Pflanzen/Rasenfläche |
| 4 | Außenhaut |
| 4a | Dachabschnitt |
| 10 | Träger |
| 10a | Unterseite |
| 10b | Oberseite |
| 20 | Leitung |
| 21 | Auslass |
| 22 | Bewässerungsleitung |
| 23 | Auslass |
| 100 | Lichtquelle |
| 101 | Abdeckung |
| 102, 103 | Kühlkörper |

## Patentansprüche

1. Einrichtung (1) zur Beleuchtung von Pflanzen (3), insbesondere einer Rasenfläche (3), mit:
- einer Mehrzahl an Lichtquellen (100), und
- einem Träger (10) zum Tragen der Lichtquellen (100),
der als flexibles Flächengebilde ausgebildet ist, wobei die Lichtquellen (100) an dem Träger (10) festgelegt sind, und der Träger (10) weiterhin ein Mittel (20) umfasst, welches dazu ausgebildet ist, Wasser zum Bewässern der Pflanzen (3), insbesondere der Rasenfläche (3), zu führen und abzugeben, wobei insbesondere das Mittel (20) mit einer Wasserquelle (Q') verbunden ist oder verbindbar ist, **dadurch gekennzeichnet, dass** das Mittel (20) weiterhin zum Führen und Abgeben von CO₂ ausgebildet ist, vorzugsweise in Form einer flexiblen Leitung, das an dem Träger (10) festgelegt ist und einen oder mehrere Auslässe (21) zum Auslassen von CO₂ aufweist.

2. Einrichtung nach Anspruch 1, **dadurch gekennzeichnet, dass** das Flächengebilde eines der folgenden Flächengebildet ist:
- ein textiles Flächengebilde, vorzugsweise ein Gewebe, oder
- eine Folie, vorzugsweise aus einem Kunststoff.

3. Einrichtung nach Anspruch 1 oder 2, **dadurch gekennzeichnet, dass** der Träger nicht-permeabel für Flüssigkeiten, insbesondere für Wasser, und/oder nicht-permeabel für Gase, insbesondere für CO₂, ausgebildet ist.

4. Einrichtung nach einem der vorhergehenden Ansprüche, **dadurch gekennzeichnet, dass** das Mittel (20) vom Träger (10) zumindest abschnittsweise umgeben ist.

5. Einrichtung nach einem der vorhergehenden Ansprüche, **dadurch gekennzeichnet, dass** das Mittel (20) mit einem CO₂-Speicher (Q) verbunden oder verbindbar ist.

6. Einrichtung nach einem der vorhergehenden Ansprüche, **dadurch gekennzeichnet, dass** die Einrichtung (1) eine vorzugsweise flexible Bewässerungsleitung (22) zum Führen und Abgeben von Wasser aufweist, die an dem Träger (10) festgelegt ist und einen oder mehrere Auslässe (23) zum Auslassen von Wasser aufweist.

7. Einrichtung nach Anspruch 6, **dadurch gekennzeichnet, dass** die Bewässerungsleitung (22) vom Träger (10) zumindest abschnittsweise umgeben ist.

8. Einrichtung nach einem der vorhergehenden Ansprüche, **dadurch gekennzeichnet, dass** jede der Lichtquellen (100) eine LED (110) aufweist.

9. Einrichtung nach einem der vorhergehenden Ansprüche, **dadurch gekennzeichnet, dass** die Lichtquellen (100) in Reihen am Träger (10) angeordnet sind.

10. Einrichtung nach einem der vorhergehenden Ansprüche, **dadurch gekennzeichnet, dass** sich das Mittel (20) zum Abgeben von CO₂ zumindest abschnittsweise zwischen benachbarten Lichtquellen (100) entlang des Trägers (10) erstreckt.

11. Einrichtung nach Anspruch 6 oder einem der Ansprüche 7 bis 10 soweit rückbezogen auf Anspruch 6, **dadurch gekennzeichnet, dass** sich die Bewässerungsleitung (22) zumindest abschnittsweise zwischen benachbarten Lichtquellen (100) entlang des Trägers (10) erstreckt.

12. Einrichtung nach einem der vorhergehenden Ansprüche, **dadurch gekennzeichnet, dass** die Einrichtung (1) ein nach unten hin offenes Gehäuse (2) aufweist, das eine Außenhaut (4) aufweist, die dazu eingerichtet und vorgesehen ist, einen Raum (R) oberhalb der Pflanzen (3), insbesondere der Rasenfläche (3), zu begrenzen, wobei der Träger (10) in jenem Raum (R) angeordnet ist oder zumindest einen Teil der Außenhaut (4), vorzugsweise einen Dachabschnitt (4a) der Außenhaut (4), bildet.

13. Verfahren zum Beleuchten von Pflanzen (3), insbesondere einer Rasenfläche (3), wobei eine Einrichtung (1) gemäß einem der Ansprüche 1 bis 12 bereitgestellt wird, und die Pflanzen (3) mittels der Lichtquellen (100) beleuchtet werden, und wobei vorzugsweise die Pflanzen (3), insbesondere die Rasenfläche (3), mittels der Einrichtung (1) mit CO₂ und/oder Wasser beaufschlagt werden.

## Claims

1. A device (1) for illuminating plants (3), in particular a lawn area (3), comprising:
- a plurality of light sources (100), and
- a support (10) for supporting the light sources (100),
which is designed as a flexible fabric, wherein the light sources (100) are predefined at the support (10), and the support (10) further comprises a means (20) which is designed for carrying and discharging water for watering the plants (3), in particular the lawn area (3), wherein in particular the means (20) is connected or connectable to a water source (Q'), **characterized in that** the means (20) is further designed to carry and discharge CO₂,
preferably in the form of a flexible line, which is fixed to the support (10) and has one or more outlets (21) for discharging CO₂.

2. The device according to claim 1, **characterized in that** the fabric is one of the following fabric materials:
- a textile fabric, preferably a woven fabric, or
- a film, preferably of a plastic material.

3. The device according to claim 1 or 2, **characterized in that** the support is made to be non-permeable to liquids, in particular to water, and/or non-permeable to gases, in particular to CO₂.

4. The device according to one of the preceding claims, **characterized in that** the means (20) is surrounded by the support (10) at least in sections.

5. The device according to one of the preceding claims, **characterized in that** the means (20) is connected or connectable to a CO₂ storage tank (Q).

6. The device according to one of the preceding claims, **characterized in that** the device (1) comprises a preferably flexible irrigation line (22) for carrying and discharging water, which is fixed to the support (10) and has one or more outlets (23) for discharging water.

7. The device according to claim 6, **characterized in that** the irrigation line (22) is surrounded by the support (10) at least in sections.

8. The device according to one the preceding claims, **characterized in that** each of the light sources (100) has an LED (110).

9. The device according to one of the preceding claims, **characterized in that** the light sources (100) are arranged at the support (10) in rows.

10. The device according to one of the preceding claims, **characterized in that** the means (20) for emitting CO₂ extends along the support (10) at least in sections between adjacent light sources (100).

11. The device according to claim 6 or one of the claims 7 to 10 as far as being referred to claim 6, **characterized in that** the irrigation line (22) at least sectionally extends between adjacent light sources (100) along the support (10).

12. The device according to one of the preceding claims, **characterized in that** the device (1) comprises a housing (2) opened downwardly having an outer skin (4) which is arranged and provided to confine a space (R) above the plants (3), in particular the lawn area (3), the support (10) being arranged **in that** space (R) or forming at least part of the outer skin (4), preferably forming a roof portion (4a) of the outer skin (4).

13. A method for illuminating plants (3), in particular a lawn area (3), wherein a device (1) according to one of the claims 1 to 12 is provided and the plants (3) are illuminated using the light sources (100), and wherein preferably the plants (3), in particular the lawn area (3), are provided with CO₂ and/or water by means of the device (1).

## Revendications

1. Dispositif (1) d'éclairage de plantes (3), en particulier d'une surface de pelouse (3), comportant :
- une pluralité de sources lumineuses (100), et
- un support (10) destiné à supporter les sources lumineuses (100), qui est réalisé sous forme de structure plane, en ce que les sources lumineuses (100) sont fixées au support (10), et le support (10) comporte par ailleurs un moyen (20) qui est conçu de façon à conduire et à distribuer de l'eau pour l'arrosage des plantes (3), en particulier de la surface de pelouse (3), en ce qu'en particulier le moyen (20) est raccordé ou peut être raccordé à une source d'eau (Q'), **caractérisé en ce que** le moyen (20) en outre
est conçu pour conduire et dégager du CO₂, de préférence sous forme d'une conduite souple qui est fixée au support (10) et comporte une ou plusieurs sorties (21) pour dégager du CO₂.

2. Dispositif selon la revendication 1, **caractérisé en ce que** la structure plane est l'une des structures planes suivantes :
- une structure plane textile, de préférence un tissu, ou
- un film, de préférence en matière plastique.

3. Dispositif selon la revendication 1 ou 2, **caractérisé en ce que** le support est réalisé de manière non perméable aux liquides, en particulier à l'eau, et/ou non perméable aux gaz, en particulier au CO₂.

4. Dispositif selon l'une des revendications précédentes, **caractérisé en ce que** le moyen (20) est entouré au moins partiellement par le support (10).

5. Dispositif selon l'une des revendications précédentes, **caractérisé en ce que** le moyen (20) est raccordé ou peut être raccordé à un accumulateur de CO₂ (Q).

6. Dispositif selon l'une des revendications précédentes, **caractérisé en ce que** le dispositif (1) comporte de préférence une conduite d'arrosage (22) souple pour conduire et distribuer de l'eau, conduite qui est fixée au support (10) et qui comporte une ou plusieurs sorties (23) pour laisser de l'eau s'écouler.

7. Dispositif selon la revendication 6, **caractérisé en ce que** la conduite d'arrosage (22) est entourée au moins partiellement par le support (10).

8. Dispositif selon l'une des revendications précédentes, **caractérisé en ce que** chacune des sources lumineuses (100) comporte une LED (110).

9. Dispositif selon l'une des revendications précédentes, **caractérisé en ce que** les sources lumineuses (100) sont disposées en série sur le support (10).

10. Dispositif selon l'une des revendications précédentes, **caractérisé en ce que** le moyen (20) servant à dégager du CO₂ s'étend au moins partiellement entre des sources lumineuses adjacentes (100) le long du support (10).

11. Dispositif selon la revendication 6 ou l'une des revendications 7 à 10 dans la mesure où il fait référence à la revendication 6, **caractérisé en ce que** la conduite d'arrosage (22) s'étend au moins partiellement entre des sources lumineuses adjacentes (100) le long du support (10).

12. Dispositif selon l'une des revendications précédentes, **caractérisé en ce que** le dispositif (1) comporte un boîtier (2) ouvert vers le bas qui comporte un revêtement extérieur (4) qui est conçu et prévu pour délimiter un espace (R) au-dessus des plantes (3), en particulier de la surface de pelouse (3), **en ce que** le support (10) est disposé dans cet espace (R) ou **en ce qu'**il constitue au moins une partie du revêtement extérieur (4), de préférence un segment de couverture (4a) du revêtement extérieur (4).

13. Procédé permettant l'éclairage de plantes (3), en particulier d'une surface de pelouse (3), en ce qu'un dispositif (1) selon l'une des revendications 1 à 12 est prévu, et les plantes (3) sont éclairées au moyen de sources lumineuses (100), et en ce que de préférence les plantes (3), en particulier la surface de pelouse (3), sont exposées à du CO₂ et/ou de l'eau au moyen du dispositif (1).
